# EUROPÄISCHE PATENTSCHRIFT

(11) **EP 1 387 520 B1**
(45) Veröffentlichungstag und Bekanntmachung des Hinweises auf die Patenterteilung: **03.11.2010**
(21) Anmeldenummer: 02016823.3
(22) Anmeldetag: 29.07.2002
(51) Int. Cl.: H04L 9/08

(54) **Verfahren zum Erzeugen eines Geheimschlüssels**
Method for generating a secret key
Procédé de génération d'une clé secrète

(43) Veröffentlichungstag der Anmeldung: 04.02.2004
(73) Patentinhaber: BetaResearch GmbH, 85774 Unterföhring (DE)
(72) Erfinder: Barth, Ingo, 85774 Unterföhring (DE); Kukla, Hubert, 85445 Oberding (DE); Strobel, Tobias, 81925 München (DE); Tücke, Peter, 81829 München (DE)
(74) Vertreter: Heselberger, Johannes

(56) Entgegenhaltungen:
- MENEZES, OORSCHOT, VANSTONE: "HANDBOOK OF APPLIED CRYPTOGRAPHY" HANDBOOK OF APPLIED CRYPTOGRAPHY, CRC PRESS SERIES ON DISCRETE MATHEMATICES AND ITS APPLICATIONS, CRC PRESS, 1997, XP002237785 BOCA RATON, FL, USA ISBN: 0-8493-8523-7

## Beschreibung

Die Erfindung betrifft ein Verfahren zum Erzeugen eines Gemeinschlüssels bei einer ersten Instanz und bei einer zweiten Instanz; ferner betrifft die Erfindung ein System zum Entschlüsseln eines verschlüsselten Dienstes.

Ein Gemeinschlüssel wird zur verschlüsselten Kommunikation in einem System verwendet, in dem vertrauliche und geheime Informationen zwischen Komponenten des Systems, d.h. kryptographischen Instanzen des Systems ausgetauscht werden. Die kryptographischen Instanzen müssen sich gegenseitig authentisieren. Wird beispielsweise einer Instanz A des Systems eine Nachricht übermittelt, die von einer weiteren Instanz B des Systems stammt, dann muss die Instanz A die Authentizität der Instanz B überprüfen und umgekehrt. Bei Systemen gemäß den Standards ISO 9798 1-4 beruht die Authentisierung auf einer Verifikation einer geheimen Information im Wege eines Anfrage-Antwort Verfahrens (Challenge-Response). Bei einem bekannten Anfrage-Antwort Verfahren sendet etwa die Instanz A eine Anfrage, nämlich eine Folge von Nachrichten mit genau definierter Syntax, an die Instanz B. Indem die Instanz B auf diese Anfrage an die Instanz A eine Antwort sendet, die aus der Sicht der Instanz A korrekt und protokollgerecht ist, authentisiert sich die Instanz B gegenüber der Instanz A. Die Kommunikation zwischen der Instanz A und der Instanz B erfolgt verschlüsselt. Die Verschlüsselung wird mittels des gemeinsamen Schlüssels vorgenommen.

Ein bekanntes Verfahren zur Erzeugung eines gemeinsamen Schlüssels ist das Diffie-Hellman Verfahren. Bei diesem Verfahren erzeugen zwei Instanzen den gemeinsamen Schlüssel aus voneinander unabhängigen Zufallszahlen durch eine Anwendung kommutativer Verschlüsselungsoperationen. Das Diffie-Hellman Verfahren ist nachteilig, weil nur wenige Verschlüsselungsverfahren und mathematische Operationen eine für dieses Verfahren erforderliche Kommutativitätseigenschaft aufweisen. Ferner ist das Verfahren mit einem großen Rechenaufwand verbunden.

PCT/EP97/01557 offenbart ein Verfahren zur Kommunikation zwischen zwei Instanzen, bei dem die erste Instanz als Modul für einen bedingten Zugriff (conditional access module) einer Entschlüsselungseinrichtung zum Entschlüsseln eines Bezahlfernsehprogrammes und die zweite Instanz als eine Prozessorkarte (smart card) ausgebildet ist. Die erste Instanz erzeugt den Schlüssel. Das System ist vor Angriffen nicht sicher, denn eine dritte Instanz, mittels derer etwa ein Angrei fer einen Angriff auf das System unternimmt, kann auf die Anfrage der ersten Instanz korrekt und protokollgerecht antworten, wenn die dritte Instanz den Schlüssel kennt.

In dem "Handbook of applied cryptography" von Menezes, Oorschot und Vanstone wurden beispielsweise das Needham-Schroeder Protokoll und das Beller-Yacobi Protokoll zum Aushandeln eines kryptographischen Geheimschlüssels zwischen zwei Instanzen beschrieben.

Der Erfindung liegt die Aufgabe zugrunde, ein Verfahren anzugeben, das eine gegenüber einem Angriff auf das System besonders sichere vertrauliche Kommunikation zwischen zwei Instanzen ermöglicht.

Die Erfindung löst die Aufgabe mittels eines Verfahrens zum Erzeugen eines Gemeinschlüssels bei einer ersten Instanz und bei einer zweiten Instanz, mit den Schritten:
- Erzeugen eines erstinstanzlichen Schlüssels bei der ersten Instanz,
- Bilden einer Anfrage, bei der ersten Instanz, mit dem erstinstanzlichen Schlüssel,
- Verschlüsseln der Anfrage, bei der ersten Instanz, mittels eines öffentlichen Schlüssels,
- Übertragen der verschlüsselten Anfrage von der ersten Instanz an die zweite Instanz;
- Entschlüsseln der verschlüsselten Anfrage, bei der zweiten Instanz, mittels eines dem öffentlichen Schlüssel zugeordneten geheimen Schlüssels,
- Erzeugen eines zweitinstanzlichen Schlüssels bei der zweiten Instanz,
- Bilden einer Antwort, bei der zweiten Instanz, mit dem zweitinstanzlichen Schlüssel,
- Übertragen der Antwort von der zweiten Instanz an die erste Instanz;
- Erzeugen des Gemeinschlüssels, sowohl bei der ersten Instanz als auch bei der zweiten Instanz, indem ein symmetrischer Verschlüsselungsalgorithmus unter Verwendung sowohl des erstinstanzlichen Schlüssels als auch des zweitinstanzlichen Gemeinschlüssels verwendet wird, und
- Wechseln des Gemeinschlüssels, sowohl bei der ersten Instanz als auch bei der zweiten Instanz, gemäß einer Gemeinvorschrift.

Authentizität der ersten Instanz bedeutet, dass die erste Instanz ihre Identität etwa gegenüber der zweiten Instanz nachweist.

Das erfindungsgemäße Verfahren erfordert - etwa im Vergleich mit dem bekannten Diffie-Hellman Verfahren - nur eine geringe Rechenleistung, so dass es auch bei geringer Rechenkapazität einsetzbar ist. Dieser Vorteil ist von besonderer Bedeutung in einer Umgebung, in der spezialisierte Chips, deren Steuerprozessoren über eine sehr geringe Rechenleistung verfügen, für die Bearbeitung von Datenströmen eingesetzt werden. Handelt es sich etwa um einen Chip speziell für Sicherheitsaufgaben, so ist bei einer Ausführungsform ein Kryptographie-Koprozessor integriert. Beispielsweise verfügt eine Prozessorkarte (smart card), die zur Verwendung mit einem Modul für einen bedingten Zugriff (conditional access module - CAM), insbesondere einer sogenannten d-box, vorgesehen ist, über einen solchen Koprozcssor. Das Modul für den bedingten Zugriff selbst war ursprünglich nur für zur Kommunikation mit der Prozessorkarte vorgesehen und/oder zum Setzen bestimmten Register ausgelegt; für kryptongraphische Aufgaben eignet sich der Prozessor des Moduls dagegen nicht gut. Das erfindungsgemäße Verfahren ermöglicht jedoch die Schlüsselaushandlung sowie ggf. die Authentisierung auch mit den beschriebenen leistungsschwachen Prozessoren.

Der Wechsel des Schlüssels erhöht zusätzlich die Sicherheit des Verfahrens, weil die Verwendung des Schlüssels zeitlich begrenzt ist. Ein Angreifer, der den Schlüssel ermittelt hat, kann diesen Schlüssel nur während einer begrenzten Zeitspanne missbrauchen.

Bei einer alternativen Ausführungsform wird die Anfrage bei der ersten Instanz mit einem geheimen Schlüssel verschlüsselt. Nach dem Übertragen der verschlüsselten Anfrage von der ersten Instanz an die zweite Instanz wird die verschlüsselte Anfrage mittels eines dem geheimen Schlüssel zugeordneten öffentlichen Schlüssel entschlüsselt. Bevorzugt ist der erstinstanzliche Schlüssel als Keimzufallszahl ausgebildet. Bei einer weiteren Ausführungsform ist der zweitinstanzliche Schlüssel als Keimzufallszahl ausgebildet. Die Keimzufallszahl ist besonders zufällig und somit gegenüber Angriffen besonders sicher. Die Sicherheit ist besonders groß, wenn ein qualitativ hochwertiger Mechanismus oder Verfahren zur Erzeugung der Zufallszahlen verwendet wird. Der Mechanismus bzw. das Verfahren kann fest, d.h. hardware-implementiert sein, oder als Software vorliegen. Beispielsweise kann bei der ersten Instanz ein Zufallszahlengenerator hardware-implementiert sein, während die zweite Instanz einen Softwarezufallszahlengenerator aufweist.

Bei einer Ausführungsform umfasst das Verfahren den Schritt:
- Prüfen einer Authentizität der ersten Instanz bei der zweiten Instanz.
Dieser Schritt wird etwa nach dem Entschlüsseln der verschlüsselten Anfrage und vor dem Erzeugen des zweitinstanzlichen Schlüssels bei der zweiten Instanz durchgeführt. Bevorzugt ist eine Ausführungsform, bei der das Verfahren die Schritte umfasst:
- Erzeugen eines Authentifikationsmittels bei der ersten Instanz, und
- Einfügen des Authentifikationsmittels in die Anfrage.
Das Authentifikationsmittel ermöglicht der zweiten Instanz eine Prüfung der Authentizität der bei der zweiten Instanz empfangenen Anfrage. Bevorzugt authentifiziert sich die erste Instanz anhand des Authentifikationsmittels gegenüber der zweiten Instanz. Somit ist bei der zweiten Instanz die Gewissheit besonders groß, dass die Anfrage von der ersten Instanz übermittelt ist.

Bei einer weiteren Ausführungsform umfasst das Verfahren den Schritt:
- Prüfen einer Authentizität der zweiten Instanz bei der ersten Instanz.
Dieser Schritt wird etwa nach dem Übertragen der Antwort von der zweiten Instanz und vor dem Erzeugen des Gemeinschlüssels bei der ersten Instanz durchgeführt. Ganz besonders bevorzugt weist das Verfahren den Schritt auf, wonach bei der zweiten Instanz das Authentifikationsmittel in die Antwort (t) eingefügt wird. Anhand des Authentifikationsmittels authentifiziert sich die zweite Instanz gegenüber der ersten Instanz. Somit ist eine größere Sicherheit hinsichtlich einer Berechtigung der zweiten Instanz zur vertraulichen Kommunikation mit der ersten Instanz geschaffen. Bevorzugt ist dabei das Authentifikationsmittel als Einwegzufallszahl ausgebildet, weil die Einwegzufallszahl gegenüber Angriffen besonders sicher ist, da sie praktisch nicht rekonstruierbar ist.

Die erfindungsgemäße Generierung des Gemeinschlüssels beruht auf einem symmetrischen Verschlüsselungsalgorithmus, der nacheinander unter Gebrauch zwei verschiedener Schlüsselanteile angewendet wird, die die erste Instanz und die zweite Instanz unabhängig voneinander erzeugen. Das Verfahren verbindet allgemein gesagt einen Authentisierungsmechanismus, d.h. ein Authentisierungsverfahren, mit einem Schlüsselerzeugungsmechanismus, d.h. einem Verfahren oder einem Verfahrensabschnitt zur Generierung eines Schlüssels. Bei der Generierung des Gemeinschlüssels wirken die erste und die zweite Instanz zusammen. Die Sicherheit, insbesondere gegen Angriffe durch Wiedereinspielen des Gemeinschlüssels, ist besonders hoch, weil der Schlüssel jeweils durch eine Einwegfunktion berechnet wird. Der gemeinsam erzeugte Schlüssel kann etwa als Sitzungsschlüssel zur verschlüsselten Übertragung von Nachrichten und/oder einem verschlüsselten Austausch von weiteren Schlüsseln zwischen der ersten Instanz, etwa einem Modul für einen bedingten Zugriff, und der zweiten Instanz, etwa einer Prozessorkarte, dienen.

Bei einer Ausführungsform weist das Verfahren den Schritt auf:
- Einfügen, bei der ersten Instanz, eines erstinstanzlichen Identifikationsmittels der ersten Instanz in die Anfrage, so dass die Prüfung der Authentizität der ersten Instanz bei der zweiten Instanz anhand des erstinstanzlichen Identifikationsmittels vornehmbar ist.

Bei dieser Ausführungsform hängt die Anfrage von der Identität der ersten Instanz ab, was eine Prüfung der Authentizität der Anfrage durch die zweite Instanz ermöglicht.

Bei einer Ausführungsform weist das Verfahren die Schritte auf:
- Einfügen, bei der zweiten Instanz, eines zweitinstanzlichen Identifikationsmittels der zweiten Instanz in die Antwort, so dass die Prüfung der Authentizität der zweiten Instanz bei der ersten Instanz anhand des zweitinstanzlichen Identifikationsmittels vornehmbar ist.
Bei dieser Ausführungsform hängt die Antwort von der Identität der zweiten Instanz ab, was eine Prüfung der Authentizität der Antwort durch die erste Instanz ermöglicht. Die erste Instanz kennt die Identität der zweiten Instanz etwa aufgrund einer Abfrage des zweitinstanzlichen Identifikationsmittels, das z.B. als Seriennummer der zweiten Instanz ausgebildet ist. Die Verwendung des zweitinstanzlichen Identifikationsmittels bewirkt eine starke gegenseitige Bindung zwischen der ersten und der zweiten Instanz.

Besonders bevorzugt weist das Verfahren die Schritte auf:
- Signieren des zweitinstanzlichen Identifikationsmittels,
- Vergleichen, bei der ersten Instanz, der Signatur des signierten zweitinstanzlichen Identifikationsmittels mit einer bei der ersten Instanz hinterlegten Signatur und Abbrechen des Verfahrens, falls die Signaturen verschieden sind.
Diese Ausführungsform ist besonders sicher, weil die erste Instanz prüfen kann, ob die Signatur gültig ist, und im Falle einer Ungültigkeit der Signatur das Schlüsselgenerierungsverfahren abbrechen kann.

Bevorzugt wird bei der ersten Instanz ein Zeitstempel in die Anfrage eingefügt. Diese Ausführungsform gewährt eine besonders große Sicherheit gegen ein Wiedereinspielen der Antwort durch einen Angreifer.

Bei einer Ausführungsform weist das Verfahren die Schritte auf:
- Verschlüsseln zumindest eines Teiles der Antwort, bei der zweiten Instanz, so daß die Antwort von der zweiten Instanz verschlüsselt an die erste Instanz übertragen wird, und
- Entschlüsseln der übertragenen Antwort bei der ersten Instanz.
Die Verschlüsselung bietet zusätzliche Sicherheit gegen einen Angriff.

Bei einer Ausführungsform wird die Gemeinvorschrift in Abhängigkeit der Zeit gebildet, so dass der Wechsel des Schlüssels über einen längeren Zeitraum für den Angreifer selbst dann unvorhersagbar ist, wenn der Angreifer die gegenwärtig verwendete Gemeinvorschrift kennt, da diese Gemeinvorschrift mit der Zeit ihre Gültigkeit verliert. Bei einer weiteren Ausführungsform wird die Gemeinvorschrift in Abhängigkeit der Anzahl von Verwendungen des Gemeinschlüssels gebildet.

Bevorzugt werden die einzelnen Verfahrensschritte, Gruppen von Verfahrensschritten oder das gesamte Verfahren iterativ durchgeführt. Vorherige Abläufe der ersten Instanz und/oder der zweiten Instanz werden protokolliert. Beispielsweise werden Werte aus vergangenen Verfahrensschritten jeweils zu Prüfwerten komprimiert, indem etwa eine Hashfunktion einen Hashwert erzeugt. Die Prüfwerte gehen als Parameter in einen oder mehrere nachfolgende Verfahrensschritte ein.

Die Erfindung löst die Aufgabe desweiteren mittels einer ersten Vorrichtung zum Entschlüsseln eines verschlüsselten Dienstes, insbesondere einem Modul für einen bedingten Zugriff, mit einer Entschlüsselungseinrichtung, einer Verarbeitungseinrichtung und einer Speichereinrichtung, wobei ein in der Speichereinrichtung gespeichertes Programm zum Durchführen jener Verfahrensschritte des erfindungsgemäßen Verfahrens, insbesondere mittels der Verarbeitungseinrichtung, vorgesehen ist, die zur Vornahme bei der ersten Instanz vorgesehen sind.

Die Erfindung löst die Aufgabe ferner mittels einer zweiten Vorrichtung, insbesondere einer Prozessorkarte, zum Zusammenwirken mit der ersten Vorrichtung zum Entschlüsseln des verschlüsselten Dienstes, wobei die zweite Vorrichtung eine Verarbeitungseinrichtung aufweist und eine Speichereinrichtung, in der ein Programm zum Durchführen, insbesondere mittels der Verarbeitungseinrichtung, jener Verfahrensschritte des erfindungsgemäßen Verfahrens gespeichert ist, die zur Vornahme bei der zweiten Instanz vorgesehen sind.

Die Erfindung löst die Aufgabe mittels eines Systems zum Entschlüsseln eines verschlüsselten Dienstes, mit der ersten erfindungsgemäßen Vorrichtung zum Entschlüsseln des verschlüsselten Dienstes, insbesondere dem Modul für einen bedingten Zugriff, wobei die erste Vorrichtung als eine erste Instanz ausgebildet ist, und mit einer zweiten Vorrichtung, insbesondere einer Prozessorkarte, die als zweite Instanz zum Zusammenwirken mit der ersten Instanz ausgebildet ist. Bevorzugt ist auch die zweite Vorrichtung erfindungsgemäß ausgebildet.

Die Erfindung löst die Aufgabe mittels eines Computerprogramms, das in einen Speicher einer digitalen Datenverarbeitungseinrichtung ladbar ist, mit Programmabschnitten, die dazu vorgesehen sind, Schritte des erfindungsgemäßen Verfahrens zu steuern, falls das Computerprogramm auf der digitalen Datenverarbeitungseinrichtung läuft. Bevorzugt, ist das Computerprogramm auf einem maschinenlesbaren Medium, insbesondere einem computerlesbaren Medium gespeichert.

Die Erfindung löst die Aufgabe mittels eines maschinenlesbaren Mediums, insbesondere eines computerlesbaren Mediums, das ein erfindungsgemäßes Computerprogramm aufweist.

Ausführungsformen der Erfindung können in jeder Entschlüsselungseinrichtung zum Entschlüsseln eines digitalen Dienstes, insbesondere eines digitalen Fernsehprogrammes gemäß dem Digital Video Broadcasting (DVB) Standard sowie künftigen Versionen dieses Standards, verwendet werden.

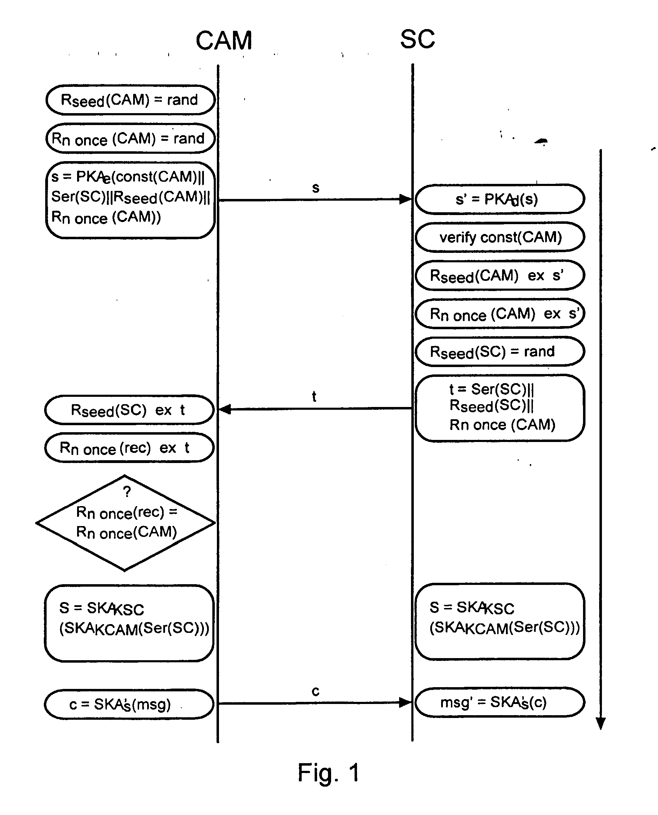

Nachfolgend wird ein Ausführungsbeispiel anhand der Figur 1 näher erläutert, die einen Protokollablauf zeigt, der sich beim Ablauf des erfindungsgemäßen Verfahrens ergibt.

Bei dem Ausführungsbeispiel erfolgt die erfindungsgemäße Erzeugung eines Gemeinschlüssels für ein kryptographisches Gesamtsystem, das ein Modul für einen bedingten Zugriff (conditional access module) CAM, etwa eine sogenannte d-box, und eine Prozessorkarte (smart card) SC umfasst, die in das Modul CAM für den bedingten Zugriff zur Kommunikation miteinander eingesteckt ist. Das Modul CAM für den bedingten Zugriff ist als Bestandteil einer Entschlüsselungseinrichtung (decoder) wie etwa der sogenannten d-box ausgebildet. Diese Anwendung ist nur ein Beispiel; denkbar sind auch andere Ausführungsbeispiele, denn zur Realisierung des Protokolls, d.h. des erfindungsgemäßen Verfahrens, können beliebige Geräte mit kryptographischer Funktionalität dienen. Dies können verschiedene Schnittstellen eines Softwaresystems oder eines Netzwerkes sein, z.B. eines Computemetzwerkes, eines Datennetzwerkes, eines Kommunikationsnetzwerkes, eines Digitaldienstnetzwerkes etc.

Zum Erzeugen des Gemeinschlüssels, der etwa als Sitzungsschlüssel gebraucht wird, wenden die Instanzen des kryptographischen Gesamtsystems, d.h. das Modul CAM für den bedingten Zugriff und die Prozessorkarte SC das erfindungsgemäße Verfahren an:

Zunächst erzeugt das Modul CAM für den bedingten Zugriff mit den Schritten "R_{seed}(CAM) = rand" sowie "R_{n once} (CAM) = rand" eine Keimzufallszahl R_{seed}(CAM) zur Ableitung des Sitzungsschlüssels sowie eine "Wegwerfzufallszahl" R_{n once} (CAM), die als Einmalschlüssel nur zur einmaligen Verwendung vorgesehen ist. Bevorzugt weisen diese Zahlen eine Länge von 128 Bit oder mehr, besonders bevorzugt eine Länge von 160 Bit oder mehr ganz besonders bevorzugt eine Länge von 256 Bit oder mehr auf. Die Zufallszahlen R_{seed}(CAM) und R_{n once} (CAM) sind voneinander unabhängig.

Das Modul CAM für den bedingten Zugriff generiert eine Anfragenachricht, die unter Anwendung eines öffentlichen Verschlüsselungsalgorithmus (public key algorithm) PKAₑ verschlüsselt ist und eine Anfrage s (lies: "klein s") bildet. Der öffentliche Verschlüsselungsalgorithmus PKAₑ ist asymmetrisch ausgebildet und verwendet zum Verschlüsseln einen öffentlichen Schlüssel (public key) e_{PKF}(CAM; SC) sowie zum Entschlüsseln einen geheimen Schlüssel (private key) d_{PKF}(CAM, SC). Die Schlüssel e_{PKF}(CAM; SC) und d_{PKF}(CAM, SC) sind sowohl dem Modul CAM für den bedingten Zugriff als auch der Prozessorkarte SC zugeordnet.

Die Anfragenachricht ist mittels des öffentlichen Schlüssels e_{PKF}(CAM; SC) verschlüsselt. Die Anfragenachricht weist nacheinander vier Elemente auf, die durch Konkatenation, d.h. Zusammenstellung aufeinander folgender Zeichenketten, aneinandergereiht sind: eine Konstante const(CAM), die das Modul CAM für den bedingten Zugriff identifiziert, eine Seriennummer Ser(SC) der Prozessorkarte SC, die das Modul CAM für den bedingten Zugriff von der Prozessorkarte SC abgefragt oder auf eine andere Weise erhalten hat, die Keimzufallszahl R_{seed}(CAM), sowie den Einmalschlüssel R_{n once} (CAM). Den Einmalschlüssel R_{n once} (CAM) erzwingt in der Anfragenachricht eine zeitliche Bindung und garantiert, dass die Kommunikation instantan erfolgt. Damit die in der Anfrage verschlüsselte Nachricht in einer vorgegebenen Länge ausgebildet ist, kann es erforderlich sein, die Elemente zu einer vorgegebenen Länge beispielsweise mit Nullen zu ergänzen. Die verschlüsselte Anfrage s ist in Fig. 1 in Formelschreibweise wiedergegeben: "s = PKAₑ(const(RAM) || Ser(SC) || R_{seed}(CAM) || R_{n once} (CAM))". Bei einer Ausführungsform fügt das Modul CAM für den bedingten Zugriff anstelle oder zusätzlich zu der Seriennummer Ser(SC) eine Seriennummer Ser(CAM) des Moduls in die Anfragenachricht ein, um eine Überprüfung der Authentizität der Anfragenachricht zu erleichtern. Bei einer hier nicht weiter erläuterten Ausführungsform weist die Anfrage s ferner einen Zeitstempel auf. Bei einer weiteren Ausführungsform wird die Anfrage s im Wege einer Iteration generiert, wobei vorherige Abläufe beim Modul CAM für den bedingten Zugriff und/oder bei der Prozessorkarte SC - etwa mittels Berechnung von Hashwerten bezüglich historischer Daten - protokolliert werden.

Das Modul CAM für den bedingten Zugriff überträgt die verschlüsselte Anfrage s an die Prozessorkarte SC.

Die Prozessorkarte SC entschlüsselt mit dem Schritt "s' = PKA_{d}(s)" die in der von dem Modul CAM für den bedingten Zugriff empfangene Anfrage s enthaltene Nachricht unter Verwendung des geheimen Schlüssels d_{PKF}(CAM, SC), der dem öffentlichen Verschlüsselungsalgorithmus PKA_{d} zugeordnet ist, und erhält die Anfragenachricht s'. Aus dieser Anfragenachricht s' extrahiert die Prozessorkarte SC die Konstante const(CAM). Mit dem Schritt "verify const(CAM)" erkennt die Prozessorkarte SC anhand der Konstante const(CAM), dass die Herkunft der Anfrage s authentisch ist, d.h. dass die Anfrage s oder die Anfragenachricht tatsächlich von dem Modul CAM für den bedingten Zugriff stammt. Desweiteren extrahiert die Prozessorkarte SC aus der Anfragenachricht s' mit den Schritten "R_{seed}(CAM) ex s' " sowie "R_{n once} (CAM) ex s' " die Komponenten R_{seed}(CAM) bzw. R_{n once} (CAM). Mit dem Schritt "R_{seed}(SC) = rand" erzeugt die Prozessorkarte SC eine Keimzufallszahl R_{seed}(SC) zur Ableitung des Sitzungsschlüssels.

Die Prozessorkarte SC generiert eine Antwort t, die eine Antwortnachricht an das Modul CAM für den bedingten Zugriff enthält. Die Antwortnachricht weist nacheinander drei Elemente auf, die durch Konkatenation aneinandergereiht sind: die Seriennummer Ser(SC) der Prozessorkarte SC, die Keimzufallszahl R_{seed}(SC), sowie den Einmalschlüssel R_{n once} (CAM). Damit die in der Antwort t enthaltene Antwortnachricht in einer vorgegebenen Länge ausgebildet ist, kann es erforderlich sein, die Elemente zu einer vorgegebenen Länge beispielsweise mit Nullen zu ergänzen. Die Antwort t ist in Fig. 1 in Formelschreibweise wiedergegeben: "t = Ser(SC) || R_{seed}(SC) || R_{n once} (CAM)". Bei einer nicht weiter erläuterten Ausführungsform ist die Seriennummer Ser(SC) der Prozessorkarte SC signiert, damit das Modul CAM für den bedingten Zugriff anhand der Signatur die Authentizität der empfangenen Seriennummer Ser(SC) feststellen kann.

Die Prozessorkarte SC generiert ferner den Sitzungsschlüssel S (lies: "groß s") unter Anwendung eines symmetrischen Verschlüsselungsalgorithmus (symmetric key algorithm) SKA_{KSC}, SKA_{KCAM} auf die Seriennummer Ser(SC) der Prozessorkarte SC. Zunächst verschlüsselt die Prozessorkarte SC die Seriennummer Ser(SC) mittels der Keimzufallszahl R_{seed}(CAM), die somit als Modulschlüssel KCAM verwendet wird, um ein Zwischenergebnis SKA_{KCAM}(Ser(SC)) zu erhalten. Dann verschlüsselt die Prozessorkarte SC das Zwischenergebnis SKA_{KCAM}(Ser(SC)) mittels der Keimzufallszahl R_{seed}(SC), die somit als Kartenschlüssel KSC verwendet wird, um den Sitzungsschlüssel S zu erhalten. Der Sitzungsschlüssel S ist in Fig. 1 in Formelschreibweise ausgedrückt: "S = SKA_{KSC}(SKA_{KCAM}(Ser(SC)))".

Die Prozessorkarte SC überträgt die unverschlüsselte Antwort t an das Modul CAM für den bedingten Zugriff. Obwohl mit der Antwort t die Keimzufallszahl R_{seed}(SC) im Klartext übertragen wird, kann ein Angreifer keinen gültigen Sitzungsschlüssel erzeugen, da der Angreifer den nur kurzlebigen Sitzungsschlüssel R_{seed}(CAM) nicht kennt. Bei einer weiteren Ausführungsform verschlüsselt die Prozessorkarte SC die Antwortnachricht und überträgt die verschlüsselte Antwort an das Modul CAM für den bedingten Zugriff. Aufgrund der Verschlüsselung ist die Sicherheit des Verfahrens zusätzlich erhöht.

Das Modul CAM für den bedingten Zugriff analysiert - erforderlichenfalls nach einer Entschlüsselung - die in der von der Prozessorkarte SC empfangene Antwort t enthaltene Antwortnachricht: Anhand der Seriennummer Ser(SC) der Prozessorkarte SC erkennt das Modul CAM für den bedingten Zugriff, dass die Herkunft der Antwort t authentisch ist, d.h. dass die Antwort t oder die Antwortnachricht tatsächlich von der Prozessorkarte SC stammt. Die Verwendung der Seriennummer Ser(SC) der Prozessorkarte SC bewirkt eine starke gegenseitige Bindung zwischen dem Modul CAM für den bedingten Zugriff und der Prozessorkarte SC. Bei einer Ausführungsform wird statt oder neben der Seriennummer Ser(SC) der Prozessorkarte SC ein weiteres kartenindividuelles Merkmal verwendet.

Mit einem in Figur 1 nicht dargestellten Schritt extrahiert das Modul CAM für den bedingten Zugriff aus der Antwortnachricht ggf. die Komponente Ser(SC). Desweiteren extrahiert das Modul CAM für den bedingten Zugriff mit den Schritten "R_{seed}(SC) ex t" sowie "R_{n once} (rec) ex t" aus der Antwortnachricht die Komponenten R_{seed}(SC) bzw. R_{n once} (rec).

Das Modul CAM für den bedingten Zugriff vergleicht mit dem Schritt "? R_{n once} (rec) = R_{n once} (CAM)" den Einmalschlüssel R_{n once} (rec), den das Modul CAM von der Prozessorkarte SC empfangen hat, mit dem Einmalschlüssel R_{n once} (CAM), den das Modul CAM zu Beginn des Verfahrens selbst erzeugt hat. Im Falle einer Übereinstimmung ist die Antwort t authentisch, d.h. dass die Antwort t oder die Antwortnachricht tatsächlich von der Prozessorkarte SC stammt. Insofern sind die Schritte des Vergleichens der Seriennummern Ser(SC) und des Vergleichens der Wegwerfzufallszahlen redundant. Die Redundanz bedeutet eine erhöhte Sicherheit gegen einen Angreifer, der etwa eine Pirateriekarte verwendet.

Das Modul CAM für den bedingten Zugriff generiert den Sitzungsschlüssel S wie die Prozessorkarte SC unter Anwendung des symmetrischen Verschlüsselungsalgorithmus SKA_{KSC}, SKA_{KCAM} auf die Seriennummer Ser(SC) der Prozessorkarte SC. Zunächst verschlüsselt das Modul CAM die Seriennummer Ser(SC) mittels der Keimzufallszahl R_{seed}(CAM), die somit als Modulschlüssel KCAM verwendet wird, um ein Zwischenergebnis SKA_{KCAM}(Ser(SC)) zu erhalten. Dann verschlüsselt das Modul CAM das Zwischenergebnis SKA_{KCAM}(Ser(SC)) mittels der Keimzufallszahl R_{seed}(SC), die somit als Kartenschlüssel KSC verwendet wird, um den Sitzungsschlüssel S zu erhalten. Der Sitzungsschlüssel S ist in Fig. 1 in Formelschreibweise ausgedrückt: "S = SKA_{KSC}(SKA_{KCAM}(Ser(SC)))".

Die Prozessorkarte SC und das Modul CAM für den bedingten Zugriff erzeugen somit im Zusammenwirken miteinander gemäß der Erfindung mittels des symmetrischen Verschlüsselungsalgorithmus SKA jeweils den Sitzungsschlüssel S als Gemeinschlüssel. Der Rechenaufwand zur Durchführung dieses Verfahrens ist vergleichsweise gering, so dass das Verfahren auch dann durchführbar ist, wenn zur Durchführung nur eng beschränkte Resourcen zur Verfügung stehen.

Unter Anwendung des Sitzungsschlüssels S erfolgt nun eine verschlüsselte Kommunikation zwischen dem Modul CAM für den bedingten Zugriff und der Prozessorkarte SC. Beispielsweise wendet das Modul CAM das symmetrische Verschlüsselungsverfahren SKA auf eine Nachricht msg an und erhält so die Kommunikationsnachricht c. Das Modul CAM überträgt die Kommunikationsnachricht c an die Prozessorkarte SC. Die Prozessorkarte SC entschlüsselt die Kommunikationsnachricht c, um eine Nachricht msg' zu gewinnen, die der gesendeten Nachricht msg entspricht.

Der gemeinsame Sitzungschlüssel S wird nach der Benutzung gemäß einer beidseitig, d.h. sowohl bei dem Modul CAM als auch bei der Prozessorkarte SC bekannten Funktion gewechselt. Der Wechsel erfolgt zum Beispiel in Abhängigkeit der Zeit und/oder der Anzahl der Einsätze des Schlüssels S.

## Patentansprüche

1. Verfahren zum Erzeugen eines Gemeinschlüssels (S) bei einer ersten Instanz (CAM) und bei einer zweiten Instanz (SC), mit den Schritten:
- Erzeugen eines erstinstanzlichen Schlüssels (Rseed(CAM)) bei der ersten Instanz (CAM),
- Bilden einer Anfrage (s) bei der ersten Instanz (CAM) mit dem erstinstanzlichen Schlüssel (Rseed(CAM)),
- Verschlüsseln der Anfrage (s) bei der ersten Instanz (CAM) mittels eines öffentlichen Schlüssels (ePKF),
- Übertragen der verschlüsselten Anfrage (s) von der ersten Instanz (CAM) an die zweite Instanz (SC);
- Entschlüsseln der verschlüsselten Anfrage (s) bei der zweiten Instanz (SC) mittels eines dem öffentlichen Schlüssel (ePKF) zugeordneten geheimen Schlüssels (dPKF),
- Erzeugen eines zweitinstanzlichen Schlüssels (Rseed(SC)) bei der zweiten Instanz (SC),
- Bilden einer Antwort (t) bei der zweiten Instanz (SC) mit dem zweitinstanzlichen Schlüssel (Rseed(SC)),
- Übertragen der Antwort (t) von der zweiten Instanz (SC) an die erste Instanz (CAM);
- Erzeugen des Gemeinschlüssels (S), sowohl bei der ersten Instanz (CAM) als auch bei der zweiten Instanz (SC), indem ein symmetrischer Verschlüsselungsalgorithmus unter Verwendung sowohl des erstinstanzlichen Schlüssels (Rseed(CAM)) als auch des zweitinstanzlichen Schlüssels (Rseed(SC)) verwendet wird, **dadurch gekennzeichnet, daß**
- der Gemeinschlüssel (S), sowohl bei der ersten Instanz (CAM) als auch bei der zweiten Instanz (SC), gemäß einer Gemeinvorschrift gewechselt wird.

2. Verfahren nach Anspruch 1,
**gekennzeichnet durch** die Schritte:
- Erzeugen eines Authentifikationsmittels (Rnonce(CAM)) bei der ersten Instanz (CAM),
- Einfügen des Authentifikationsmittels (Rnonce(CAM)) in die Anfrage (s), und
- Prüfen der Authentizität der ersten Instanz (CAM) bei der zweiten Instanz (SC) anhand des Authentifikationsmittels (Rnonce(CAM)) der Anfrage (s).

3. Verfahren nach Anspruch 2,
**gekennzeichnet durch** die Schritte:
- Einfiigen, bei der zweiten Instanz (SC), des Authentifikationsmittels (Rnonce(CAM)) in die Antwort (t), und
- Prüfen der Authentizität der zweiten Instanz (SC) bei der ersten Instanz (CAM) anhand des Authentifikationsmittels (Rnonce(CAM)) der Antwort (t).

4. Verfahren nach einem der Ansprüche 2 oder 3,
**gekennzeichnet durch** den Schritt:
- Einfiigen, bei der ersten Instanz (CAM), eines erstinstanzlichen Identifikationsmittels (const(CAM)) der ersten Instanz (CAM) in die Anfrage (s), so dass die Prüfung der Authentizität der ersten Instanz (CAM) bei der zweiten Instanz (SC) anhand des erstinstanzlichen Identifikationsmittels (const(CAM)) vornehmbar ist.

5. Verfahren nach einem der Ansprüche 2 bis 4,
**gekennzeichnet durch** die Schritte:
- Einfiigen, bei der zweiten Instanz (SC), eines zweitinstanzlichen Identifikationsmittels (Ser(SC)) der zweiten Instanz (SC) in die Antwort (t), so dass die Prüfung der Authentizität der zweiten Instanz (SC) bei der ersten Instanz (CAM) anhand des zweitinstanzlichen Identifikationsmittels (Ser(SC)) vornehmbar ist.

6. Verfahren nach Anspruch 5,
**gekennzeichnet durch** die Schritte,
- Signieren des zweitinstanzlichen Identifikationsmittels (Ser(SC)),
- Vergleichen, bei der ersten Instanz, der Signatur des signierten zweitinstanzlichen Identifikationsmittels (Ser(SC)) mit einer bei der ersten Instanz hinterlegten Signatur und Abbrechen des Verfahrens, falls die Signaturen verschieden sind.

7. Verfahren nach Anspruch 6,
**gekennzeichnet durch** den Schritt:
- Einfiigen, bei der ersten Instanz (CAM), eines Zeitstempels in die Anfrage (s).

8. Verfahren nach einem der vorstehenden Ansprüche,
**gekennzeichnet durch** den Schritt:
- Verschlüsseln zumindest eines Teiles der Antwort (t), bei der zweiten Instanz (SC), so daß die Antwort (t) von der zweiten Instanz (SC) verschlüsselt an die erste Instanz (CAM) übertragen wird, und
- Entschlüsseln der übertragenen Antwort (t) bei der ersten Instanz (CAM).

9. Verfahren nach einem der vorhergehenden Ansprüche,
**gekennzeichnet durch** den Schritt:
- Bilden der Gemeinvorschrift in Abhängigkeit der Zeit.

10. Verfahren nach einem der vorhergehenden Ansprüche,
**gekennzeichnet durch** den Schritt:
- Bilden der Gemeinvorschrift in Abhängigkeit der Anzahl von Verwendungen des Gemeinschlüssels (S).

11. Verfahren nach einem der vorstehenden Ansprüche,
**gekennzeichnet durch** ein iteratives Durchführen eines einzelnen Verfahrensschrittes und/oder einer Gruppe von Verfahrensschritten.

12. Vorrichtung zum Entschlüsseln eines verschlüsselten Dienstes,
mit einer Entschlüsselungseinrichtung, einer Verarbeitungseinrichtung und einer Speichereinrichtung,
**gekennzeichnet durch** ein in der Speichereinrichtung gespeichertes Programm zum Durchführen jener Verfahrensschritte nach einem der vorstehenden Verfahrensansprüche, die zur Vornahme bei der ersten Instanz (CAM) vorgesehen sind.

13. Vorrichtung, zum Zusammenwirken mit einer Vorrichtung zum Entschlüsseln eines verschlüsselten Dienstes, mit einer Verarbeitungseinrichtung und einer Speichereinrichtung,
**gekennzeichnet durch** ein in der Speichereinrichtung gespeichertes Programm zum Durchführen jener Verfahrensschritte nach einem der vorstehenden Verfahrensansprüche, die zur Vornahme bei der zweiten Instanz (SC) vorgesehen sind.

14. System zum Entschlüsseln eines verschlüsselten Dienstes, mit einer ersten Vorrichtung zum Entschlüsseln des verschlüsselten Dienstes, wobei die erste Vorrichtung als eine erste Instanz (CAM) ausgebildet ist, und
mit einer zweiten Vorrichtung, die als zweite Instanz (SC) zum Zusammenwirken mit der ersten Instanz (CAM) ausgebildet ist,
**dadurch gekennzeichnet, daß** die erste Vorrichtung nach Anspruch 12 ausgebildet ist.

15. System nach dem vorstehenden Anspruch,
**dadurch gekennzeichnet, daß** die zweite Vorrichtung nach Anspruch 13 ausgebildet ist.

16. Computerprogramm, das in einen Speicher einer digitalen Datenverarbeitungseinrichtung ladbar ist, mit Programmabschnitten, die dazu vorgesehen sind, Verfahrensschritte nach einem der vorstehenden Verfahrensansprüche zu steuern, falls das Computerprogramm auf der digitalen Datenverarbeitungseinrichtung läuft.

17. Computerprogramm nach dem vorstehenden Anspruch, das auf einem maschinenlesbaren Medium gespeichert ist.

## Claims

1. A method for generating a common key (S) at a first entity (CAM) and at a second entity (SC), comprising the following steps:
- generating a first entity key (Rseed(CAM)) at the first entity (CAM);
- forming a request (s) at the first entity (CAM) with the first entity key (Rseed(CAM));
- encoding the request (s) at the first entity (CAM) by means of a public key (ePKF);
- transmitting the encoded request (s) from the first entity (CAM) to the second entity (SC);
- decoding the encoded request (s) at the second entity (SC) by means of a secret key (dPKF) associated to the public key (ePKF);
- generating a second entity key (Rseed(SC)) at the second entity (SC);
- forming a reply (t) at the second entity (SC) with the second entity key (Rseed(SC));
- transmitting the reply (t) from the second entity (SC) to the first entity (CAM);
- generating the common key (S) at the first entity (CAM) as well as at the second entity (SC) by using an symmetrical encryption algorithm using both the first entity key (Rseed(CAM)) and the second entity key (Rseed(SC)), **characterized in that**
- the common key (S) is changed at both the first entity (CAM) as well as at the second entity (SC) according to a common regulation.

2. The method of claim 1,
**characterized by** the steps:
- generating means for authentication (Rnonce(CAM)) at the first entity (CAM);
- including the means for authentication (Rnonce(CAM)) to the request (s), and
- verifying the authenticity of the first entity (CAM) at the second entity (SD) based on the means for authentication (Rnonce(CAM)) of the request (s).

3. The method of claim 2,
**characterized by** the steps:
- including at the second entity (SC) the means for authentication (Rnonce(CAM)) to the reply (t), and
- verifying the authenticity of the second entity (SC) at the first entity (CAM) based on the means for authentication (Rnonce(CAM)) of the reply (t).

4. The method of one of the claims 2 or 3,
**characterized by** the step:
- including at the first entity (CAM) a first entity means for identification (const(CAM)) of the first entity (CAM) to the request (s) such that the verification of the authenticity of the first entity (CAM) at the second entity (SC) can be done based on the first entity means for identification (const(CAM)).

5. The method of one of the claims 2 to 4,
**characterized by** the steps:
- including at the second entity (SC) a second entity means for identification (Ser(SC)) of the second entity (SC) to the reply (t) such that the verification of the authenticity of the second entity (SC) at the first entity (CAM) can be done based on the second entity means for identification (Ser(SC)).

6. The method of claim 5,
**characterized by** the steps:
- signing of the second entity means for identification (Ser(SC));
- comparing at the first entity the signature of the signed second entity means for identification (Ser(SC)) with a signature deposited at the first entity and terminating the method, if the signatures differ.

7. The method of claim 6,
**characterized by** the step:
- including at the first entity (CAM) a timestamp to the request (s).

8. The method of one of the preceding claims,
**characterized by** the step:
- encrypting at least part of the reply (t) at the second entity (SC) such that the reply (t) of the second entity (SC) is transmitted in encrypted form to the first entity (CAM), and
- decrypting of the transmitted reply (t) at the first entity (CAM).

9. The method of one of the preceding claims,
**characterized by** the step:
- forming the common regulation depending on the time.

10. The method of one of the preceding claims,
**characterized by** the step:
- forming a common regulation depending on the number of usages of the common key (S).

11. The method of one of the preceding claims,
**characterized by** iteratively conducting a single method step and/or a group of method steps.

12. An apparatus for decrypting an encrypted service with a decrypting unit, a processing unit, and a memory unit;
**characterized by** a program stored in the memory unit for conducting those method steps in accordance with one of the preceding method claims which are intended to be carried out at the first entity (CAM).

13. An apparatus for interacting with an apparatus to decrypt an encrypted service with a processing unit and a memory unit;
**characterized by** a program stored in the memory unit for conducting those method steps in accordance with one of the preceding method claims which are intended to be carried out at the second entity (SC).

14. A system for decrypting an encrypted service, with
a first apparatus for encrypting the decrypted service, wherein the first apparatus is formed as a first entity (CAM), and
with an second apparatus which is formed as second entity (SC) for interacting with the first entity (CAM),
**characterized in that** the first apparatus is formed according to claim 12.

15. The system in accordance with the preceding claim,
**characterized in that** the second apparatus is formed according to claim 13.

16. A computer program that is loadable into a memory of a digital data processing unit with program sections intended to control method steps according to one of the preceding method claims, if the computer program runs on the digital data processing unit.

17. The computer program in accordance with the preceding claim, which is stored on machine readable medium.

## Revendications

1. Procédé pour générer une clé commune (S) à une première instance (CAM) et à une deuxième instance (SC), comprenant les étapes suivantes :
- génération d'une clé de première instance (Rseed(CAM)) dans la première instance (CAM),
- formulation d'une demande (s) dans la première instance (CAM) avec la clé de première instance (Rseed(CAM)),
- cryptage de la demande (s) dans la première instance (CAM) au moyen d'une clé publique (ePKF),
- transmission de la demande (s) cryptée de la première instance (CAM) à la deuxième instance (SC) ;
- décryptage de la demande (s) cryptée dans la deuxième instance (SC) au moyen d'une clé secrète (dPKF) associée à la clé publique (ePKF),
- génération d'une clé de deuxième instance (Rseed(SC)) dans la deuxième instance (SC),
- formulation d'une réponse (t) dans la deuxième instance (SC) avec la clé de deuxième instance (Rseed(SC)),
- transmission de la réponse (t) de la deuxième instance (SC) à la première instance (CAM) ;
- génération de la clé commune (S), aussi bien dans la première instance (CAM) que dans la deuxième instance (SC), en se servant d'un algorithme de cryptage symétrique avec utilisation aussi bien de la clé de première instance (Rseed(CAM)) que de la clé de deuxième instance (Rseed(SC)),
**caractérisé en ce que** la clé commune (S) est changée selon une prescription commune aussi bien dans la première instance (CAM) que dans la deuxième instance (SC).

2. Procédé selon la revendication 1, **caractérisé par** les étapes suivantes :
- génération d'un moyen d'authentification (Rnonce(CAM)) dans la première instance (CAM),
- incorporation du moyen d'authentification (Rnonce(CAM)) dans la demande (s), et
- contrôle de l'authenticité de la première instance (CAM) dans la deuxième instance (SC) à l'aide du moyen d'authentification (Rnonce(CAM)) de la demande (s).

3. Procédé selon la revendication 2, **caractérisé par** les étapes suivantes :
- incorporation, dans la deuxième instance (SC), du moyen d'authentification (Rnonce(CAM)) dans la réponse (t), et
- contrôle de l'authenticité de la deuxième instance (SC) dans la première instance (CAM) à l'aide du moyen d'authentification (Rnonce(CAM)) de la réponse (t).

4. Procédé selon une des revendications 2 ou 3, **caractérisé par** l'étape suivante :
- incorporation, dans la première instance (CAM), d'un moyen d'identification de première instance (const(CAM)) de la première instance (CAM) dans la demande (s), de façon que le contrôle de l'authenticité de la première instance (CAM) dans la deuxième instance (SC) puisse être effectué à l'aide du moyen d'identification de première instance (const(CAM)).

5. Procédé selon une des revendications 2 à 4, **caractérisé par** les étapes suivantes :
- incorporation, dans la deuxième instance (SC), d'un moyen d'identification de deuxième instance (Ser(SC)) de la deuxième instance (SC) dans la réponse (t), de façon que le contrôle de l'authenticité de la deuxième instance (SC) dans la première instance (CAM) puisse être effectué à l'aide du moyen d'identification de deuxième instance (Ser(SC)).

6. Procédé selon la revendication 5, **caractérisé par** les étapes suivantes :
- signature du moyen d'identification de deuxième instance (Ser(SC)),
- comparaison, dans la première instance, de la signature du moyen d'identification de deuxième instance signé (Ser(SC)) avec une signature déposée dans la première instance et interruption du procédé si les signatures sont différentes.

7. Procédé selon la revendication 6, **caractérisé par** l'étape suivante :
- incorporation, dans la première instance (CAM), d'un timbre horodateur dans la demande (s).

8. Procédé selon une des revendications précédentes, **caractérisé par** les étapes suivantes :
- cryptage d'au moins une partie de la réponse (t), dans la deuxième instance (SC), de façon que la réponse (t) soit transmise sous forme cryptée de la deuxième instance (SC) à la première instance (CAM), et
- décryptage de la réponse (t) transmise dans la première instance (CAM).

9. Procédé selon une des revendications précédentes, **caractérisé par** l'étape suivante :
- formulation de la prescription commune en fonction du temps.

10. Procédé selon une des revendications précédentes, **caractérisé par** l'étape suivante :
- formulation de la prescription commune en fonction du nombre d'utilisations de la clé commune (S).

11. Procédé selon une des revendications précédentes, **caractérisé par** une exécution itérative d'une étape de procédé individuelle et/ou d'un groupe d'étapes de procédé.

12. Dispositif de décryptage d'un service crypté, comprenant un équipement de décryptage, un équipement de traitement et un équipement de mémorisation, **caractérisé par** un programme mémorisé dans l'équipement de mémorisation pour exécuter les étapes de procédé selon une des revendications de procédé précédentes qui sont prévues pour être exécutées dans la première instance (CAM).

13. Dispositif destiné à coopérer avec un dispositif de décryptage d'un service crypté, comprenant un équipement de traitement et un équipement de mémorisation, **caractérisé par** un programme mémorisé dans l'équipement de mémorisation pour exécuter les étapes de procédé selon une des revendications de procédé précédentes qui sont prévues pour être exécutées dans la deuxième instance (SC).

14. Système de décryptage d'un service crypté, comprenant un premier dispositif de décryptage du service crypté, le premier dispositif étant réalisé sous la forme d'une première instance (CAM), et comprenant un deuxième dispositif qui est réalisé sous la forme d'une deuxième instance (SC) destinée à coopérer avec la première instance (CAM), **caractérisé en ce que** le premier dispositif est réalisé selon la revendication 12.

15. Système selon la revendication précédente, **caractérisé en ce que** le deuxième dispositif est réalisé selon la revendication 13.

16. Programme d'ordinateur qui peut être chargé dans une mémoire d'un appareil numérique de traitement de données, comprenant des parties de programme qui sont prévues pour commander des étapes de procédé selon une des revendications de procédé précédentes si le programme d'ordinateur s'exécute sur l'appareil numérique de traitement de données.

17. Programme d'ordinateur selon la revendication précédente, lequel est mémorisé sur un support lisible par une machine.
